Europäisches Patentamt

European Patent Office

Office européen des brevets

(11) Veröffentlichungsnummer: **0 484 840 A1**

# EUROPÄISCHE PATENTANMELDUNG

(21) Anmeldenummer: **91118710.2**

(51) Int. Cl.5: **B01D 53/36**

(22) Anmeldetag: **02.11.91**

(30) Priorität: **08.11.90 DE 4035468**

(43) Veröffentlichungstag der Anmeldung:
**13.05.92 Patentblatt 92/20**

(84) Benannte Vertragsstaaten:
**AT DE IT NL**

(71) Anmelder: **BERGWERKSVERBAND GMBH**
**Postfach 13 01 40**
**W-4300 Essen 13(DE)**

(72) Erfinder: **Wünnenberg, Wolfgang**
**Tiergarten 16**
**W-4300 Essen 16(DE)**
Erfinder: **Richter, Ekkehard**
**Schmachtenbergstrasse 89**
**W-4300 Essen 18(DE)**
Erfinder: **Knoppik, Berthold**
**Stiftsbusch 6**
**W-4300 Essen 1(DE)**
Erfinder: **Schmidt, Hans-Jürgen**
**Waldsaum 119**
**W-4300 Essen 1(DE)**

(54) **Verfahren zum Abscheiden von Stickstoffoxiden aus Rauchgasen.**

(57) Verfahren zum Abscheiden von Stickstoffoxiden aus Rauchgasen, bei dem ein kontinuierlicher Rauchgasstrom vorzugsweise nach Durchlauf einer Rauchgasentschwefelungsanlage durch ein Bett mit körnigem, kohlenstoffhaltigem Adsorptionsmittel geleitet und dem Rauchgasstrom Ammoniak als Reduktionsmittel in periodischen Intervallen zudosiert wird, wobei das Bett in mehrere Segmente unterteilt wird und in jedes einzelne Segment nacheinander periodisch Ammoniak zudosiert wird.

Fig.1

EP 0 484 840 A1

Die Erfindung betrifft ein Verfahren zum Abscheiden von Stickstoffoxiden gemäß dem Oberbegriff des Anspruchs 1 sowie eine Vorrichtung zur Durchführung des Verfahrens.

Aus der DE C1 36 04 045 ist bekannt, bei einem Verfahren zum Abscheiden von Stickstoffoxiden aus Rauchgasen zu dem kontinuierlichen Rauchgasstrom in periodischen Intervallen Ammoniak zuzugeben. Durch diese Fahrweise wird ein Ammoniakdurchbruch bei hohen $NO_x$-Ab-scheidegraden vermieden.

Bei dem gattungsgemäßen Verfahren ist es von Nachteil, daß während des Zugabeintervalls die Ammoniakmenge ein Vielfaches der durchschnittlich benötigten Menge beträgt. Das bedeutet, daß die Ammoniakquelle, in der Regel ein Ammoniakverdampfer, um ein Vielfaches größer ausgelegt werden muß als bei einem Verfahren mit kontinuierlicher Ammoniakzugabe. Durch die Abnahme großer Ammoniakmengen während der Intervalle kann der Druck im Verdampfer nicht konstant gehalten werden, wodurch eine genaue Dosierung erschwert wird.

Der Erfindung liegt die Aufgabe zugrunde, bei dem gattungsgemäßen Verfahren zur Abscheidung von Stickstoffoxiden die Ammoniakdosierung mit größerer Genauigkeit und mit einer Ammoniakquelle geringerer Kapazität durchzuführen. Eine weitere Aufgabe der Erfindung liegt darin, eine Vorrichtung zur Durchführung des Verfahrens bereitzustellen.

Diese Aufgabe wird erfindungsgemäß durch die kennzeichnenden Merkmale des Anspruchs 1 gelöst.

Vorteilhafte Ausführungen der Vorrichtung zur Durchführung des Verfahrens sind in den Ansprüchen 2, 3 und 4 niedergelegt.

Gemäß der Erfindung besteht das mit körnigen kohlenstoffhaltigen Adsorptionsmittel gefüllte Bett, das im Quer- oder Gegenstrom angeströmt werden kann, aus mehreren getrennten Segmenten. Dem Rauchgas wird vor jedem Segment Ammoniak getrennt zugegeben. Bei n Segmenten wird die Zugabeintervallänge auf l/n der Gesamtintervallänge, bestehend aus Zugabeintervallänge und Ruheintervallänge, eingestellt. Die jeweils anderen Segmente werden während dieser Zeit nicht mit Ammoniak beaufschlagt.

Diese Fahrweise hat den Vorteil, daß der Ammoniakverdampfer kontinuierlich Ammoniak liefern kann. Der kontinuierliche Ammoniakstrom wird nacheinander dem Rauchgasstrom vor den einzelnen Segmenten zugegeben. Für das jeweilige Segment ergibt sich somit eine Zudosierung in periodischen Intervallen. Der Ammoniakverdampfer kann so ausgelegt werden, als ob die Ammoniakzugabe kontinuierlich erfolgt. Ein Ammoniakdurchbruch wird jedoch vermieden.

Dadurch, daß der Verdampfer kontinuierlich betrieben werden kann, lassen sich die entsprechenden Ammoniakmengen für das jeweilige Segment besser dosieren, so daß Ammoniakschlupfspitzen vermieden werden.

Die Ammoniakzuführung zu den einzelnen Segmenten kann entweder über eine $NH_3$-Mischkammer, die jedem einzelnem Segment zugeordnet ist, oder über Ammoniaklanzen erfolgen.

Gemäß einer vorteilhaften Weiterbildung der Erfindung kann die Ammoniakzugabe mit einer beweglichen Ammoniaklanze erfolgen. Dabei wird das Ammoniak kontinuierlich mit der Ammoniaklanze dem Rauchgasstrom zugeführt. Die Ammoniaklanze ist vor den einzelnen Segmenten des Bettes verfahrbar angeordnet, so daß jedem einzelnen Segment periodisch Ammoniak zugeführt wird. Durch die unterschiedliche Fahrgeschwindigkeit der Ammoniaklanze kann die Intervallänge geregelt werden. Wird das Verfahren in einem runden Wanderbettreaktor durchgeführt, so ist eine Ammoniaklanze in dem Wanderbettreaktor drehbar angeordnet.

Die Erfindung wird nachfolgend anhand der Zeichnung und der Beispiele näher beschrieben.

Die Zeichnung zeigt in der

**Figur 1** eine schematische Darstellung eines Wanderbettreaktors mit 5 Segmenten, vor denen jeweils eine Ammoniaklanze angeordnet ist und in der

**Figur 2** eine schematische Darstellung eines Wanderbettreaktors mit einer verfahrbar angeordneten Ammoniaklanze und in der

**Figur 3** eine Draufsicht auf einen runden Wanderbettreaktor, in dem eine Ammoniaklanze drehbar angeordnet ist.

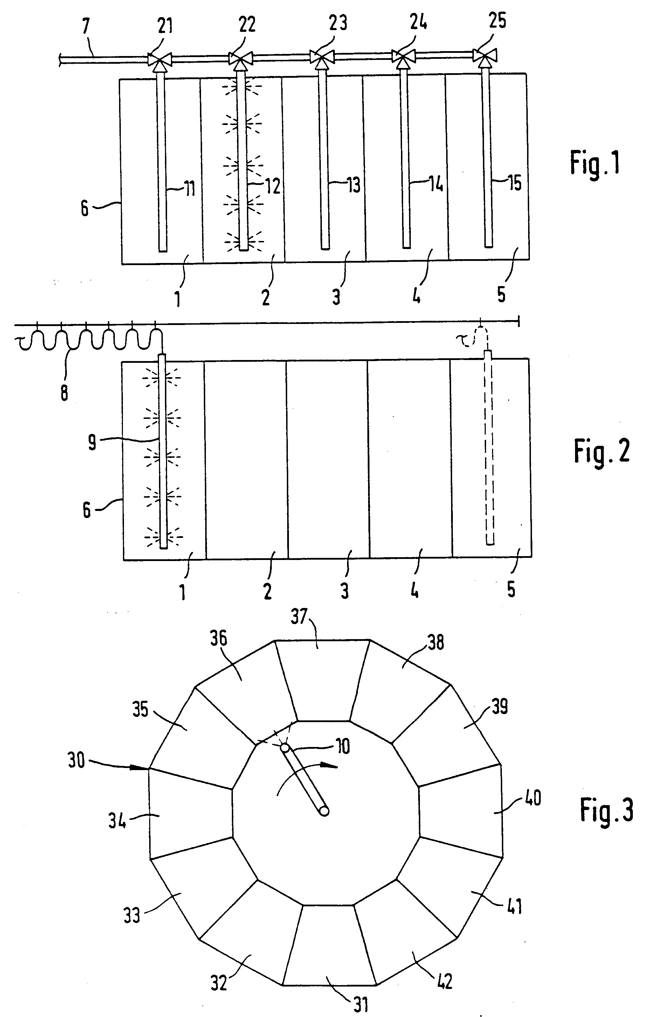

Aus der Figur 1 geht hervor, daß ein Wanderbettreaktor 6 in fünf Segmente 1, 2, 3, 4, 5 unterteilt ist, vor denen jeweils eine Ammoniaklanze 11, 12, 13, 14, 15 angeordnet ist. Das Ammoniak wird über eine Leitung 7 den Ammoniaklanzen 11, 12, 13, 14, 15 zugeführt. Die Regelung der Zugabeintervalle erfolgt über Ventile 21, 22, 23, 24, 25, die über einen nicht dargestellten Rechner angesteuert werden.

In der Figur 2 ist vor dem Wanderbettreaktor 6, mit den Segmenten 1, 2, 3, 4, 5 eine verfahrbare Ammoniaklanze 9 angeordnet. Die Ammoniakzuführung erfolgt über eine flexible Leitung 8. Die Fahrgeschwindigkeit der Ammoniaklanze 8 vor den Segmenten 1, 2, 3, 4, 5 wird über einen Rechner geregelt.

In der Figur 3 ist ein runder Wanderbettreaktor 30 mit zwölf Segmenten 31 - 42 dargestellt. In dem Wanderbettreaktor 30 ist eine drehbare Ammoniaklanze 10 angeordnet. Durch Veränderung der Drehgeschwindigkeit wird die Zugabeintervallänge und die Ruheintervallänge eingestellt.

**Vergleichsbeispiel**

**(Stand der Technik gemäß DE-PS 36 04 045)**

In einem Reaktor werden aus einem Rauchgas die Stickoxide mit Ammoniak als Reduktionsmittel entfernt:

Roh-Rauchgas

$V$ = 1.000 000 $m^3$/h (i.N., tr.)

$NO_x$ = 1.000 $mg/m^3$ (i.N., gemessen als $NO_2$)

$SO_2$ = 0 $mg/m^3$ (i.N.)

Reingas

$NO_x$ = 200 $mg/m^3$ (i.N., tr. gemessen als $NO_2$)

$NH_3$ = 35 $mg/m^3$ (i.N.)

Der Gesamt-Ammoniakbedarf beträgt 330,6 kg/h. Bei einer Gesamtintervallänge von 60 min. beträgt die Zugabeintervallänge 5 min.. Das bedeutet, daß der Ammoniakverdampfer eine Leistung von 12 x 330,6 kg = 3967,2 kg/h aufweisen muß, da während des Zugabeintervalls von 5 min. die benötigte Ammoniakmenge zugegeben werden muß.

**Beispiel**

Aus dem Rauchgas des Vergleichsbeispiels sollen nach dem erfindungsgemäßen Verfahren die Stickoxide bis auf einen $NO_x$-Gehalt von 200 $mg/m^3$ entfernt werden. Der $NH_3$-Gehalt des Reingases soll 5 vpm = 4 $mg/m^3$ betragen.

Der Reaktor hat eine Gesamtanströmfläche von 1.000 $m^2$, die in 10 Segmente zu je 100 $m^2$ unterteilt ist. Der Gesamt-Ammoniakbedarf beträgt 324 kg/h. Diese Ammoniakmenge wird dem Reaktor mit Hilfe der verfahrbaren Ammoniaklanze gemäß Figur 2 kontinuierlich zugeführt. Die Zugabeintervallänge für jedes Segment beträgt 1/10 der Gesamtintervallänge. Der Ammoniakverdampfer weist eine Leistung von 324 kg/h auf.

Das Beispiel belegt, daß mit einem Ammoniakverdampfer, der eine um den Faktor 12 geringere Leistung aufweist, ein Rohgas, wie im Vergleichsbeispiel beschrieben, entstickt werden kann. Dabei beträgt der gemessene Ammoniak-Gehalt des Reingases nur 4 $mg/m^3$ im Gegensatz zu 35 $mg/m^3$ gemäß dem Stand der Technik.

**BEZUGSZEICHENLISTE**

| | |
|---|---|
| 1 | Segment |
| 2 | Segment |
| 3 | Segment |
| 4 | Segment |
| 5 | Segment |
| 6 | Wanderbettreaktor |
| 7 | Leitung |
| 8 | flexible Leitung |
| 9 | verfahrbare Ammoniaklanze |
| 10 | drehbare Ammoniaklanze |
| 11 | Ammoniaklanze |
| 12 | Ammoniaklanze |
| 13 | Ammoniaklanze |
| 14 | Ammoniaklanze |
| 15 | Ammoniaklanze |
| 21 | Ventil |
| 22 | Ventil |
| 23 | Ventil |
| 24 | Ventil |
| 25 | Ventil |
| 30 | Wanderbettreaktor |
| 31 | Segment |
| 32 | Segment |
| 33 | Segment |
| 34 | Segment |
| 35 | Segment |
| 36 | Segment |
| 37 | Segment |
| 38 | Segment |
| 39 | Segment |
| 40 | Segment |
| 41 | Segment |
| 42 | Segment |

**Patentansprüche**

1. Verfahren zum Abscheiden von Stickstoffoxiden aus Rauchgasen mit niedrigem Schwefelgehalt, bei dem ein kontinuierlicher Rauchgasstrom durch ein Bett mit körnigem kohlenstoffhaltigem Adsorptionsmittel geleitet und dem Rauchgasstrom die Gesamtmenge Ammoniak als Reduktionsmittel entsprechend dem erforderlichen $NO_x$-Abscheidegrad in periodischen Intervallen zudosiert wird, **dadurch gekennzeichnet,** daß das Bett in n Segmente unterteilt wird und in jedes einzelne Segment nacheinander periodisch eine Ammoniakteilmenge entsprechend dem erforderlichen $NO_x$-Abscheidegrad zudosiert wird.

2. Vorrichtung zur Durchführung des Verfahrens nach Anspruch 1, **dadurch gekennzeichnet,** daß ein Wanderbettreaktor (6) in fünf Segmente (1, 2, 3, 4, 5) unterteilt ist, vor denen jeweils eine Ammoniaklanze (11, 12, 13, 14, 15) angeordnet ist.

3.  Vorrichtung zur Durchführung des Verfahrens nach Anspruch 1, **dadurch gekennzeichnet,** daß eine Ammoniaklanze (9) vor den einzelnen Segmenten (1, 2, 3, 4, 5) des Bettes verfahrbar angeordnet ist.

4.  Vorrichtung zur Durchführung des Verfahrens nach Anspruch 1, **dadurch gekennzeichnet,** daß das Verfahren in einem runden Wanderbettreaktor (30) durchgeführt wird, in dem eine Ammoniaklanze (10) drehbar angeordnet ist.

Fig.1

Fig.2

Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 328 777 (BASF AG) * Zusammenfassung; Seite 4, Zeilen 9-10,15-26; Abbildung 2 * | 1 | B 01 D 53/36 |
| Y,D | DE-C-3 604 045 (STEAG AG) * Ansprüche 1-8; Abbildung 1 * | 1,2 | |
| Y | DE-A-3 232 544 (MITSUI MINING CO., LTD) * Ansprüche 1,3,5; Seite 6, Zeile 19 – Seite 7, Zeile 3, Abbildungen 2,4 * | 1,2 | |
| A | WO-A-8 704 947 (KRAFTANLAGEN AG) * Seite 10, Zeile 20 – Seite 11, Zeile 22; Ansprüche 1-3; Abbildungen 1,2 * | 1,2,4 | |
| A | EP-A-0 215 196 (DIDIER ENGINEERING GmbH) * Anspruch 1 * | 1 | |

| | | | RECHERCHIERTE SACHGEBIETE (Int. Cl.5) |
|---|---|---|---|
| | | | B 01 D |

Der vorliegende Recherchenbericht wurde für alle Patentansprüche erstellt

| Recherchenort | Abschlußdatum der Recherche | Prüfer |
|---|---|---|
| DEN HAAG | 07-02-1992 | EIJKENBOOM A.F. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

     & : Mitglied der gleichen Patentfamilie, übereinstimmendes Dokument